# EUROPEAN PATENT APPLICATION

(11) **EP 4 379 754 A1**
(43) Date of publication of application: **05.06.2024**
(21) Application number: 22847787.3
(22) Date of filing: 17.01.2022
(51) Int. Cl.: H01F 1/057, H01F 41/02, C22C 38/06

(54) **NEODYMIUM-IRON-BORON MAGNETIC MATERIAL, PREPARATION METHOD THEREFOR AND APPLICATION THEREOF**

(30) Priority: 29.07.2021 CN 202110866196
(71) Applicant: Fujian Golden Dragon Rare-earth Co., Ltd., Longyan, Fujian 366300 (CN)
(72) Inventor: MOU, Weiguo, Longyan, Fujian 366300 (CN); HUANG, Jiaying, Xiamen, Fujian 361000 (CN); JIANG, Zheng, Longyan, Fujian 366300 (CN)
(74) Representative: karo IP
(86) International application number: PCT/CN2022/072256
(87) International publication number: WO 2023/005166

(57) **Abstract**

The invention discloses a neodymium-iron-boron magnet material, a preparation method and use thereof. The neodymium-iron-boron magnet material comprises the following components of: 28-33 wt% of R, wherein R is a rare earth element, and R comprises Pr and 27-31.5 wt% of Nd; 0.30-1.3 wt% of Al; 0.35-0.6 wt% of Cu; ≥ 0.85 wt% of Co; 0.98-1.2 wt% of B; ≥ 0.25 wt% of Nb; 62-69 wt% of Fe, wherein wt% is a percentage of the mass of respective component in the total mass of the neodymium-iron-boron magnet material; and the contents of the Nb and the Pr in the neodymium-iron-boron magnet material satisfy the following formula: Nd/Pr ≥ 58. In the present invention, by optimizing the formula of the neodymium-iron-boron magnet material, the coercivity of the neodymium-iron-boron magnet material prepared is improved while maintaining higher levels of remanence and squareness.

## Description

### FIELD OF THE INVENTION

The invention relates to a neodymium-iron-boron magnet material, a preparation method and use thereof.

### BACKGROUND OF THE INVENTION

Permanent magnet materials have been developed as key materials for supporting electronic devices. R-T-B based permanent magnet materials have the highest magnetic properties and are used in many fields such as voice coil motors for hard drives, motors for electric vehicles and motors for industry equipment.

How to further improve the comprehensive performance of R-T-B based permanent magnet materials is currently a research direction in this field. For example, Chinese patent document CN110993233A discloses a R-T-B based permanent magnet material, wherein by increasing the content of X (Al\Cu\Ga) and adjusting the content of rare earths to change the ratio of Fe and B, a 6:13:1 phase can be formed with only the conventional content of B, a magnet material with excellent magnetic properties is achieved.

Furthermore, for example, Chinese patent document CN111180159A also discloses a neodymium-iron-boron permanent magnet material, and the specific examples in this patent disclose a magnet material having the following components and structure of: 29wt% of Nd, 0.1wt% of Tb, 0.4wt% of Dy, 0.4wt% of Cu, 0.5wt% of Al, 0.9wt% of Co, 1wt% of B, 0.25wt% of Nb, and 67.45wt% of Fe; and a specific mass proportion of a Tb_{0.4}Dy_{2.5}-Al_{0.59}-Nd_{89.6}-Cu_{1.4}-Co_{5.1} phase is generated in the intergranular region rare-earth rich phase.

The above formulas are based on the improvement of high Cu and high Al magnet materials, which is mainly because the addition of Cu can effectively improve the coercivity of neodymium-iron-boron magnet materials. However, the enrichment of too much Cu (such as 0.35wt% or more) at the grain boundary will lead to the formation of microcracks in the magnet after sintering, thus reducing the compactness and strength of the magnet. In the prior art, the addition of Al is generally used (such as Chinese patent document CN110993234A) to solve the above-mentioned defects. However, the properties such as coercivity and remanence of the magnet materials with the above formulas still cannot reach the theoretical values of the permanent magnet materials.

How to further optimize the formula of magnet materials to obtain a neodymium-iron-boron magnet material with higher comprehensive performance of coercivity and remanence is a technical problem that needs to be solved urgently.

### SUMMARY OF THE INVENTION

In order to overcome the defect relating low magnetic properties of the neodymium-iron-boron magnet materials containing Al and Cu in the prior art, the invention provides a neodymium-iron-boron magnet material, a preparation method and use thereof. In the present invention, by optimizing the formula of the neodymium-iron-boron magnet material, the coercivity of the neodymium-iron-boron magnet material prepared is improved while maintaining higher levels of remanence and squareness.

The invention solves the above-mentioned technical problem mainly through the following technical solutions.

The invention provides a neodymium-iron-boron magnet material, comprising the following components of:
28-33 wt% of R, wherein R is a rare earth element, and R comprises Pr and 27-31.5 wt% of Nd;
0.30-1.3 wt% of Al;
0.35-0.6 wt% of Cu;
≥ 0.85 wt% of Co;
0.98-1.2 wt% of B;
≥ 0.25 wt% of Nb;
62-69 wt% of Fe, wherein
wt% is a percentage of the mass of respective component in the total mass of the neodymium-iron-boron magnet material; and
the contents of the Nb and the Pr in the neodymium-iron-boron magnet material satisfy the following formula: Nd/Pr ≥ 58.

In the invention, the content of R is preferably 29-32.5wt%, such as 29.3wt%, 29.6wt%, 29.7wt%, 30.6wt%, 30.7wt%, 31.3wt%, 31.5wt%, 31.9wt%, 32wt%, 32.1wt% or 32.3wt%, wherein wt% is the mass percentage of R in the total mass of the neodymium-iron-boron magnet material.

In the invention, the content of Nd is preferably 27-31wt%, such as 27.5wt%, 28.3wt%, 28.9wt%, 29.1wt%, 29.3wt%, 29.5wt%, 29.7wt%, 29.8wt%, 30.2wt%, 30.5wt% or 30.7wt.%, wherein wt% is the mass percentage of Nd in the total mass of the neodymium-iron-boron magnet material.

In the present invention, the neodymium-iron-boron magnet material can further comprise RH, wherein the RH is a heavy rare earth element.

Wherein, the RH has the conventional content in this field, and is preferably 0.5-2.5wt%, such as 0.6wt%, 0.9wt%, 1wt%, 1.2wt%, 1.4wt%, 1.5wt%, 1.7wt%, 2wt%, 2.3wt%, wherein wt% is the mass percentage of RH in the total mass of the neodymium-iron-boron magnet material.

Wherein, the RH is preferably Dy and /or Tb.

When the RH comprises Dy, the content of Dy is preferably 0.2-2.5wt%, such as 0.2wt%, 0.9wt%, 1.4wt%, 1.5wt%, 1.7wt% or 2.3wt%, wherein wt% is the mass percentage of Dy in the total mass of the neodymium-iron-boron magnet material.

When the RH comprises Tb, the content of Tb is preferably 0.5-2.5wt%, such as 0.6wt%, 0.8wt%, 1.2wt% or 2wt%, wherein wt% is the mass percentage of Tb in the total mass of the neodymium-iron-boron magnet material.

In the invention, the value of Nd/Pr is preferably 60-400, such as 98, 135, 275, 283, 289, 291, 295, 297, 298, 302, 305 or 307. Those skilled in the field know that the Nd/Pr refers to the ratio of the content of Nd to the content of Pr.

In the invention, the content of Pr is preferably 0.1-0.3wt%, such as 0.2wt%, wherein wt% is the mass percentage of Pr in the total mass of the neodymium-iron-boron magnet material.

In the invention, the content of Al is preferably 0.45-1.15wt%, such as 0.46wt%, 0.61wt%, 0.65wt%, or 0.7wt%, wherein wt% is the mass percentage of Al in the total mass of the neodymium-iron-boron magnet material.

In the invention, the content of Cu is preferably 0.35-0.45wt%, such as 0.36wt%, 0.37wt%, 0.38wt%, 0.39wt%, 0.4wt% or 0.42wt%, wherein wt% is the mass percentage of Cu in the total mass of the neodymium-iron-boron magnet material.

In the invention, the content of Co is preferably 0.9-2.5wt%, such as 1wt%, 1.1wt%, 1.2wt%, 1.3wt%, 1.4wt%, or 1.5wt%, wherein wt% is the mass percentage of Co in the total mass of the neodymium-iron-boron magnet material.

In the invention, the content of Nb is preferably 0.25-0.55wt%, such as 0.26wt%, 0.3wt% or 0.35wt%, wherein wt% is the mass percentage of Nb in the total mass of the neodymium-iron-boron magnet material.

In the invention, the content of B is preferably 0.98-1.05wt%, such as 0.99wt%, 1wt%, 1.01wt%, 1.02wt% or 1.04wt%, wherein wt% is the mass percentage of B in the total mass of the neodymium-iron-boron magnet material.

In the invention, the content of Fe is preferably 63-68wt%, such as 63.71wt%, 63.84wt%, 64.17wt%, 64.75wt%, 64.82wt%, 64.83wt%, 65.25wt.%, 65.61wt%, 65.78wt%, 66.23wt%, 66.84wt%, 67.04wt%, 67.24wt%, 67.34wt% or 67.35wt%, wherein wt% is the mass percentage of Fe in the total mass of the neodymium-iron-boron magnet material.

In the invention, the neodymium-iron-boron magnet material preferably comprises a NdₓPr_{y}Co_{z} phase, wherein based on the total moles of the Nd, the Pr and the Co in the NdₓPr_{y}Co_{z} phase being 100%, x is 50-57%, y is 3-7%, and z is 39-46%; the NdₓPr_{y}Co_{z} phase is located in a grain boundary phase, wherein the ratio of the area of the NdₓPr_{y}Co_{z} phase to the total area of the grain boundary phase is preferably 3-7%, and more preferably 4.5-5.5%, such as 4.9%, 5%, 5.1%, 5.2%, or 5.3%. The area of the NdₓPr_{y}Co_{z} phase or the total area of the grain boundary phase respectively refers to the area thereof occupied in the vertical orientation plane of the detected neodymium-iron-boron magnet material.

Wherein, the x is, for example, 51%, 52%, 53%, 54%, 55% or 56%.

Wherein, the y is, for example, 4%, 5%, or 6%.

Wherein, the z is, for example, 40%, 41%, 42%, 43%, 44% or 45%.

Wherein, the x (y or z) refers to the percentage of the moles of the Nd (the Pr or the Co) in the NdₓPr_{y}Co_{z} phase to the total moles of all the elements in the NdₓPr_{y}Co_{z} phase.

In the invention, the grain boundary phase can be a commonly understood meaning in this field, which generally refers to the region formed by the two-particle grain boundary phase and the intergranular triangular region. The two-particle grain boundary phase is generally a grain boundary phase between two main phase particles.

The inventors found that the NdₓPr_{y}Co_{z} phase with a specific content is formed in the neodymium-iron-boron magnet material through the coordination between the above specific elements. The existence of this phase reduces the dissolution temperature of the grain boundary phase, which can significantly increase the fluidity of the grain boundary phase and improve the distribution of the grain boundary phase, thereby greatly improving the coercivity of the neodymium-iron-boron material by enhancing the demagnetic coupling ability of the grain boundary phase.

In a preferable example of the invention, the neodymium-iron-boron magnet material comprises the following components of: 29.7wt% of Nd, 0.1wt% of Pr, 1.7wt% of Dy, 0.61wt% of Al, 0.4wt% of Cu, 1wt% of Co, 0.25wt% of Nb, 0.99wt% of B and 65.25wt% of Fe, wherein wt% is a mass percentage of respective component in the total mass of the neodymium-iron-boron magnet material; the neodymium-iron-boron magnet materials comprise a Nd₅₅Pr₄Co₄₁ phase in the grain boundary phase; and the ratio of the area of the Nd₅₅Pr₄Co₄₁ phase to the total area of the grain boundary phase is 5.1%.

In a preferable example of the invention, the neodymium-iron-boron magnet material comprises the following components of: 29.8wt% of Nd, 0.1wt% of Pr, 1.4wt% of Dy, 0.46wt% of Al, 0.38wt% of Cu, 1wt% of Co, 0.25wt% of Nb, 1wt% of B and 65.61wt% of Fe, wherein wt% is a mass percentage of respective component in the total mass of the neodymium-iron-boron magnet material; the neodymium-iron-boron magnet materials comprise a Nd₅₆Pr₄Co₄₀ phase in the grain boundary phase; and the ratio of the area of the Nd₅₆Pr₄Co₄₀ phase to the total area of the grain boundary phase is 5.2%.

In a preferable example of the invention, the neodymium-iron-boron magnet material comprises the following components of: 30.2wt% of Nd, 0.1wt% of Pr, 1.7wt% of Dy, 0.61wt% of Al, 0.38wt% of Cu, 0.9wt% of Co, 0.3wt% of Nb, 0.99wt% of B and 64.82wt% of Fe, wherein wt% is a mass percentage of respective component in the total mass of the neodymium-iron-boron magnet material; the neodymium-iron-boron magnet materials comprise a Nd₅₅Pr₅Co₄₀ phase in the grain boundary phase; and the ratio of the area of the Nd₅₅Pr₅Co₄₀ phase to the total area of the grain boundary phase is 5%.

In a preferable example of the invention, the neodymium-iron-boron magnet material comprises the following components of: 29.3wt% ofNd, 0.3wt% of Pr, 2.3wt% of Dy, 0.61wt% of Al, 0.39wt% of Cu, 1wt% of Co, 0.26wt% of Nb, 1.01wt% of B and 64.83wt% of Fe, wherein wt% is a mass percentage of respective component in the total mass of the neodymium-iron-boron magnet material; the neodymium-iron-boron magnet material comprises a Nd₅₃Pr₆Co₄₁ phase in the grain boundary phase; and the ratio of the area of the Nd₅₃Pr₆Co₄₁ phase to the total area of the grain boundary phase is 5.2%.

In a preferable example of the invention, the neodymium-iron-boron magnet material comprises the following components of: 30.7wt% of Nd, 0.1wt% of Pr, 1.5wt% of Dy, 1.15wt% of Al, 0.37wt% of Cu, 1.1wt% of Co, 0.25wt% of Nb, 0.99wt% of B and 63.84wt% of Fe, wherein wt% is a mass percentage of respective component in the total mass of the neodymium-iron-boron magnet material; the neodymium-iron-boron magnet material comprises a Nd₅₃Pr₄Co₄₃ phase in the grain boundary phase; and the ratio of the area of the Nd₅₃Pr₄Co₄₃ phase to the total area of the grain boundary phase is 5.1 %.

In a preferable example of the invention, the neodymium-iron-boron magnet material comprises the following components of: 28.9wt% of Nd, 0.1wt% of Pr, 0.6wt% of Tb, 0.46wt% of Al, 0.36wt% of Cu, 1wt% of Co, 0.26wt% of Nb, 0.98wt% of B and 67.34wt% of Fe, wherein wt% is a mass percentage of respective component in the total mass of the neodymium-iron-boron magnet material; the neodymium-iron-boron magnet material comprises a Nd₅₆Pr₄Co₄₀ phase in the grain boundary phase; and the ratio of the area of the Nd₅₆Pr₄Co₄₀ phase to the total area of the grain boundary phase is 4.9%.

In a preferable example of the invention, the neodymium-iron-boron magnet material comprises the following components of: 28.3wt% of Nd, 0.1wt% of Pr, 1.2wt% of Tb, 0.45wt% of Al, 0.35wt% of Cu, 1wt% of Co, 0.26wt% of Nb, 0.99wt% of B and 67.35wt% of Fe, wherein wt% is a mass percentage of respective component in the total mass of the neodymium-iron-boron magnet material; the neodymium-iron-boron magnet material comprises a Nd₅₆Pr₄Co₄₀ phase in the grain boundary phase; and the ratio of the area of the Nd₅₆Pr₄Co₄₀ phase to the total area of the grain boundary phase is 5.2%.

In a preferable example of the invention, the neodymium-iron-boron magnet material comprises the following components of: 27wt% of Nd, 0.2wt% of Pr, 2.5wt% of Tb, 0.45wt% of Al, 0.36wt% of Cu, 1wt% of Co, 0.26wt% of Nb, 0.99wt% of B and 67.24wt% of Fe, wherein wt% is a mass percentage of respective component in the total mass of the neodymium-iron-boron magnet material; the neodymium-iron-boron magnet material comprises a Nd₅₄Pr₅Co₄₁ phase in the grain boundary phase; and the ratio of the area of the Nd₅₄Pr₅Co₄₁ phase to the total area of the grain boundary phase is 5.3%.

In a preferable example of the invention, the neodymium-iron-boron magnet material comprises the following components of: 27.5wt% of Nd, 0.1wt% of Pr, 2wt% of Tb, 0.45wt% of Al, 0.36wt% of Cu, 1.3wt% of Co, 0.26wt% of Nb, 0.99wt% of B and 67.04wt% of Fe, wherein wt% is a mass percentage of respective component in the total mass of the neodymium-iron-boron magnet material; the neodymium-iron-boron magnet material comprises a Nd₅₅Pr₄Co₄₁ phase in the grain boundary phase; and the ratio of the area of the Nd₅₅Pr₄Co₄₁ phase to the total area of the grain boundary phase is 4.9%.

In a preferable example of the invention, the neodymium-iron-boron magnet material comprises the following components of: 28.3wt% of Nd, 0.1wt% of Pr, 0.9wt% of Dy, 0.7wt% of Al, 0.42wt% of Cu, 1.5wt% of Co, 0.25wt% of Nb, 0.99wt% of B and 66.84wt% of Fe, wherein wt% is a mass percentage of respective component in the total mass of the neodymium-iron-boron magnet material; the neodymium-iron-boron magnet material comprises a Nd₅₄Pr₄Co₄₂ phase in the grain boundary phase; and the ratio of the area of the Nd₅₄Pr₄Co₄₂ phase to the total area of the grain boundary phase is 5.2%.

In a preferable example of the invention, the neodymium-iron-boron magnet material comprises the following components of: 30.5wt% of Nd, 0.1wt% of Pr, 1.5wt% of Dy, 0.65wt% of Al, 0.45wt% of Cu, 1.4wt% of Co, 0.25wt% of Nb, 0.98wt% of B and 64.17wt% of Fe, wherein wt% is a mass percentage of respective component in the total mass of the neodymium-iron-boron magnet material; the neodymium-iron-boron magnet material comprises a Nd₅₅Pr₄Co₄₁ phase in the grain boundary phase; and the ratio of the area of the Nd₅₅Pr₄Co₄₁ phase to the total area of the grain boundary phase is 5.1 %.

In a preferable example of the invention, the neodymium-iron-boron magnet material comprises the following components of: 29.7wt% of Nd, 0.1wt% of Pr, 1.7wt% of Dy, 0.61wt% of Al, 0.4wt% of Cu, 2.5wt% of Co, 0.26wt% of Nb, 1.02wt% of B and 63.71wt% of Fe, wherein wt% is a mass percentage of respective component in the total mass of the neodymium-iron-boron magnet material; the neodymium-iron-boron magnet material comprises a Nd₅₄Pr₅Co₄₁ phase in the grain boundary phase; and the ratio of the area of the Nd₅₄Pr₅Co₄₁ phase to the total area of the grain boundary phase is 5.1%.

In a preferable example of the invention, the neodymium-iron-boron magnet material comprises the following components of: 29.7wt% of Nd, 0.1wt% of Pr, 1.7wt% of Dy, 0.61wt% of Al, 0.4wt% of Cu, 1.5wt% of Co, 0.25wt% of Nb, 0.99wt% of B and 64.75wt% of Fe, wherein wt% is a mass percentage of respective component in the total mass of the neodymium-iron-boron magnet material; the neodymium-iron-boron magnet material comprises a Nd₅₁Pr₄Co₄₅ phase in the grain boundary phase; and the ratio of the area of the Nd₅₁Pr₄Co₄₅ phase to the total area of the grain boundary phase is 5.2%.

In a preferable example of the invention, the neodymium-iron-boron magnet material comprises the following components of: 29.1wt% of Nd, 0.1wt% of Pr, 1.5wt% of Tb, 0.46wt% of Al, 0.37wt% of Cu, 0.9wt% of Co, 0.35wt% of Nb, 0.99wt% of B and 66.23wt% Fe, wherein wt% is a mass percentage of respective component in the total mass of the neodymium-iron-boron magnet material; the neodymium-iron-boron magnet material comprises a Nd₅₂Pr₅Co₄₃ phase in the grain boundary phase; and the ratio of the area of the Nd₅₂Pr₅Co₄₃ phase to the total area of the grain boundary phase is 5.2%.

In a preferable example of the invention, the neodymium-iron-boron magnet material comprises the following components of: 29.5wt% of Nd, 0.1wt% of Pr, 0.2wt% of Dy, 0.8wt% of Tb, 0.46wt% of Al, 0.37wt% of Cu, 1.2wt% of Co, 0.55wt% of Nb, 1.04wt% of B and 65.78wt% Fe, wherein wt% is a mass percentage of respective component in the total mass of the neodymium-iron-boron magnet material; the neodymium-iron-boron magnet material comprises a Nd₅₂Pr₄Co₄₄ phase in the grain boundary phase; and the ratio of the area of the Nd₅₂Pr₄Co₄₄ phase to the total area of the grain boundary phase is 5.3%.

The invention further provides a preparation method of a neodymium-iron-boron magnet material, comprising the steps of: preparing a raw mixture comprising the respective components for the neodymium-iron-boron magnet material, and subjecting the raw mixture to smelting, casting, pulverization, shaping, sintering and aging treatments in turn.

The aging treatment includes a three-stage aging treatment, wherein, the temperature for a primary aging treatment is 850-950°C; the temperature for a secondary aging treatment is 600-650°C; and the temperature for a tertiary aging treatment is 450-550°C.

In the present invention, the temperature for the primary aging treatment is preferably 790-910°C, such as 900°C.

In the present invention, the time for the primary aging treatment can be for example 2-4 hours, such as 3 hours.

In the present invention, the temperature for the secondary aging treatment is preferably 610-640°C, such as 620°C or 630°C.

In the present invention, the time for the secondary aging treatment can be for example 1-4 hours, such as 2 hours.

In the present invention, the temperature for the tertiary aging treatment is preferably 470-490°C, such as 480°C.

In the present invention, the time for the tertiary aging treatment can be for example 1-4 hours, such as 3 hours.

In the present invention, the preparation method can further comprise a grain boundary diffusion treatment after the tertiary aging treatment.

Wherein, the temperature for the grain boundary diffusion treatment is preferably 850-1000°C, such as 900°C, 910°C or 920°C.

Wherein, the time for the grain boundary diffusion treatment is preferably 10-30 hours, such as 20 hours.

Wherein, the diffusion source for grain boundary diffusion treatment is a Dy metal powder or an alloy comprising Dy.

Wherein, the diffusion source for grain boundary diffusion treatment is preferably a Dy metal powder and/or an alloy comprising Dy.

The mass percentage of the diffusion source in the total mass of the neodymium-iron-boron magnet material is preferably 0.3-0.5wt%, such as 0.4wt%.

In the present invention, the process for the smelting treatment can be conventional in the field.

Wherein, the vacuum degree for the smelting is, for example, 5×10⁻²Pa.

The temperature for the smelting is 1550°C or less, such as 1530°C.

In the present invention, the process for the casting treatment may be conventional in the field.

Wherein, the casting process is, for example, a strip casting process.

Wherein, the temperature for the casting may be 1390-1460°C, for example, 1400°C.

Wherein, the alloy sheet obtained after the casting can have a thickness of 0.25-0.40 mm, such as 0.29mm.

In the present invention, the process for the pulverization can be conventional in the field.

The pulverization generally comprises hydrogen decrepitation and jet mill pulverization in turn.

Wherein, the process of the hydrogen decrepitation generally comprises hydrogen absorption, dehydrogenation, and a cooling treatment in turn.

The hydrogen absorption can be carried out under a condition of a hydrogen pressure of 0.085 MPa.

The dehydrogenation can be carried out under the condition of raising the temperature while evacuating. The temperature for the dehydrogenation can be for example 480-520°C, such as 500°C.

The jet mill pulverization can be carried out in a gas atmosphere with an oxidizing gas content of 100 ppm or less, and the oxidizing gas content refers to the content of oxygen or moisture.

After the jet mill pulverization, a lubricant such as zinc stearate is generally added. The added amount of the lubricant may be 0.05-0.15%, for example 0.12%, of the mass of the powder obtained after the jet mill pulverization.

In the present invention, the shaping is a magnetic field shaping.

Wherein, the magnetic field shaping is carried out at magnetic field strength of for example, 1.8-2.5T.

In the present invention, the process for the sintering may adopt a conventional process in the art.

Wherein, the temperature for the sintering may be 1000-1100°C, for example, 1080°C.

Wherein, the time for the sintering treatment may be 4-8 hours, for example, 6 hours.

The invention further provides a neodymium-iron-boron magnet material prepared by the preparation method as mentioned above.

The invention further provides use of the neodymium-iron-boron magnet material as an electronic component.

On the basis of conforming to common knowledge in the field, the above-mentioned preferred conditions can be combined arbitrarily to obtain the preferred examples of the present invention.

The reagents and raw materials used in the present invention are all commercially available.

The positive effects of the present invention are as follows:
In the present invention, through the coordination of the elements such as Al, Cu, Co, Nb and B or the like with specific contents, the coercivity of the neodymium-iron-boron magnet material prepared is improved significantly while maintaining higher levels of remanence and squareness.

### DETAILED DESCRIPTION OF THE INVENTION

The present invention is further illustrated below by means of examples, but the present invention is not limited to the scope of the examples. The experimental methods not indicating specific conditions in the following examples were carried out according to the conventional methods and conditions, or were selected according to the product instructions.

### Example 1

The preparation process of the neodymium-iron-boron magnet material is as follows:
(1) Smelting:
   The raw material mixture according to the composition of the neodymium-iron-boron magnet material recorded in Table 1 was smelted in a high-frequency vacuum induction melting furnace with a vacuum degree of 5×10⁻²Pa at a smelting temperature of 1530°C.
(2) Casting:
   An alloy cast sheet having a thickness of 0.29 mm was obtained by the strip casting process, wherein the casting temperature was 1400°C.
(3) Pulverization Process: hydrogen decrepitation and jet mill pulverization were carried out in turn.

The process of the hydrogen decrepitation comprised hydrogen absorption, dehydrogenation, and a cooling treatment in turn. The hydrogen absorption was carried out under the condition of hydrogen pressure of 0.085 MPa. The dehydrogenation was carried out under the condition of raising the temperature while evacuating, and the dehydrogenation temperature was 500°C.

The jet mill pulverization was performed in an atmosphere having an oxidizing gas content of 100 ppm or less. The particle size obtained by pulverization was 4.2µm, wherein, the oxidizing gas referred to oxygen or moisture content. The pressure in the grinding chamber of the jet mill was 0.68 MPa. After pulverization, a lubricant, such as zinc stearate, was added, wherein the addition of the lubricant was 0.12% of the powder weight after mixing.
(4) Magnetic Field Shaping:
   It was carried out at a magnetic field strength of 1.8-2.5T under the protection of a nitrogen atmosphere.
(5) Sintering:
   The mixture was sequentially sintered and cooled under a vacuum condition of 5×10⁻³Pa. The sintering treatment was performed at 1080°C for 6 hours. Before the cooling treatment, Ar gas can be introduced to make the pressure reach 0.05MPa.
(6) Three-Stage Aging Treatment:
   The primary aging treatment was carried out at a temperature of 900°C for 3 hours; the secondary aging treatment was carried out at a temperature of 630°C for 2 hours; the tertiary aging treatment was carried out at a temperature of 480°C for 3 hours.
(7) Grain Boundary Diffusion:
   A Dy metal powder was diffused into the magnet material obtained after the three-stage aging treatment through grain boundary diffusion treatment (the mass of the added Dy was 0.4wt%, wt% is the mass percentage of Dy in the total mass of the neodymium-iron-boron magnet material, and the remaining content being 1.3wt% for Dy recorded in Table 1 was added during smelting), wherein the temperature for the grain boundary diffusion treatment was 910°C, and the time for the grain boundary diffusion treatment was 20 hours.

In Examples 1-5 and 10-13, and Comparative Examples 1-8, raw materials according to the formula in Table 1 below were prepared, and the temperature for the secondary aging treatment is shown in Table 1, and the rest of the preparation process was the same as that in Example 1. Wherein, the content of Dy added during grain boundary diffusion was 0.4wt%, and the remaining Dy in Table 1 was added during smelting.

In Examples 6-9, 14 and 15, raw materials according to the formula in Table 1 below were prepared, wherein the preparation process did not comprise grain boundary diffusion treatment after the tertiary aging treatment. The temperature for the secondary aging treatment is shown in Table 1, and the rest of the preparation process was the same as that in Example 1.

### Effect Example 1

### 1. Determination of Components:

The neodymium-iron-boron magnet materials prepared in Examples 1-15 and Comparative Examples 1-8 were measured using a high-frequency inductively coupled plasma optical emission spectrometer (ICP-OES). The test results are shown in Table 1 below.

**Table 1 (Unit: wt%, wherein wt% is a percentage of the mass of respective component in the total mass of the neodymium-iron-boron magnet material)**

| | Nd | Pr | Dy | Tb | Al | Cu | Co | Nb | B | Fe | Nd/Pr | Temperature for Secondary Aging | Whether grain boundary diffusion is performed |
|---|---|---|---|---|---|---|---|---|---|---|---|---|---|
| Example 1 | 29.7 | 0.1 | 1.7 | | 0.61 | 0.4 | 1 | 0.25 | 0.99 | 65.25 | 297 | 630°C | Yes |
| Example 2 | 29.8 | 0.1 | 1.4 | | 0.46 | 0.38 | 1 | 0.25 | 1 | 65.61 | 298 | 610°C | Yes |
| Example 3 | 30.2 | 0.1 | 1.7 | | 0.61 | 0.38 | 0.9 | 0.3 | 0.99 | 64.82 | 302 | 620°C | Yes |
| Example 4 | 29.3 | 0.3 | 2.3 | | 0.61 | 0.39 | 1 | 0.26 | 1.01 | 64.83 | 98 | 620°C | Yes |
| Example 5 | 30.7 | 0.1 | 1.5 | | 1.15 | 0.37 | 1.1 | 0.25 | 0.99 | 63.84 | 307 | 640°C | Yes |
| Example 6 | 28.9 | 0.1 | | 0.6 | 0.46 | 0.36 | 1 | 0.26 | 0.98 | 67.34 | 289 | 610°C | No |
| Example 7 | 28.3 | 0.1 | | 1.2 | 0.45 | 0.35 | 1 | 0.26 | 0.99 | 67.35 | 283 | 610°C | No |
| Example 8 | 27 | 0.2 | | 2.5 | 0.45 | 0.36 | 1 | 0.26 | 0.99 | 67.24 | 135 | 610°C | No |
| Example 9 | 27.5 | 0.1 | | 2 | 0.45 | 0.36 | 1.3 | 0.26 | 0.99 | 67.04 | 275 | 610°C | No |
| Example 10 | 28.3 | 0.1 | 0.9 | | 0.7 | 0.42 | 1.5 | 0.25 | 0.99 | 66.84 | 283 | 620°C | Yes |
| Example 11 | 30.5 | 0.1 | 1.5 | | 0.65 | 0.45 | 1.4 | 0.25 | 0.98 | 64.17 | 305 | 620°C | Yes |
| Example 12 | 29.7 | 0.1 | 1.7 | | 0.61 | 0.4 | 2.5 | 0.26 | 1.02 | 63.71 | 297 | 610°C | Yes |
| Example 13 | 29.7 | 0.1 | 1.7 | | 0.61 | 0.4 | 1.5 | 0.25 | 0.99 | 64.75 | 297 | 610°C | Yes |
| Example 14 | 29.1 | 0.1 | | 1.5 | 0.46 | 0.37 | 0.9 | 0.35 | 0.99 | 66.23 | 291 | 610°C | No |
| Example 15 | 29.5 | 0.1 | 0.2 | 0.8 | 0.46 | 0.37 | 1.2 | 0.55 | 1.04 | 65.78 | 295 | 600°C | No |
| Comparative Example 1 | 29.3 | 0.6 | 2.3 | | 0.61 | 0.4 | 0.82 | 0.08 | 1.01 | 64.88 | 49 | 610°C | Yes |
| Comparative Example 2 | 29.3 | 0.7 | 2.3 | | 0.61 | 0.4 | 0.83 | 0.09 | 1.01 | 64.76 | 42 | 610°C | Yes |
| Comparative Example 3 | 29.1 | 0.8 | 2.3 | | 0.61 | 0.4 | 0.83 | 0.05 | 1.01 | 64.9 | 36 | 610°C | Yes |
| Comparative Example 4 | 29.3 | 0.1 | 2.3 | | 0.61 | 0.4 | 1 | 0.26 | 1.01 | 65.02 | 293 | None | Yes |
| Comparative Example 5 | 23.9 | 6.00 | 1.40 | | 0.46 | 0.38 | 1.00 | 0.26 | 1.00 | 65.6 | 4 | 610°C | Yes |
| Comparative Example 6 | 29.9 | | 1.40 | | 0.46 | 0.38 | 1.00 | 0.26 | 1.00 | 65.6 | / | 610°C | Yes |
| Comparative Example 7 | 29.8 | 0.10 | 1.40 | | 0.46 | 0.38 | 1.00 | 0.15 | 1.00 | 65.71 | 298 | 610°C | Yes |
| Comparative Example 8 | 29.8 | 0.10 | 1.40 | | 0.46 | 0.18 | 1.00 | 0.26 | 1.00 | 65.8 | 298 | 610°C | Yes |

| | | | | | | | | | | | | | |
|---|---|---|---|---|---|---|---|---|---|---|---|---|---|
| Note: "/" indicates that the element is neither added nor detected. In the neodymium-iron-boron magnet materials of the above-mentioned examples and comparative examples, the value of Fe content is 100% minus the content of all other elements. Those skilled in this field know that the content of Fe comprises some unavoidable impurities introduced during the preparation process. | | | | | | | | | | | | | |

### 2. Testing for Magnetic Performance

At room temperature of 20°C, the neodymium-iron-boron magnet materials prepared in Examples 1-15 and Comparative Examples 1-8 were tested by using a PFM pulsed BH demagnetization curve testing equipment to obtain the data of remanence (Br), intrinsic coercivity (Hcj), maximum energy product (BHmax) and squareness (Hk/Hcj). The testing results are shown in Table 2 below.

### 3. Testing for Microstructures

### FE-EPMA Detection:

The vertically oriented faces of the neodymium-iron-boron magnet materials prepared in Examples 1-15 and Comparative Examples 1-8 were polished, and tested by using a Field Emission Electron Probe Microanalyzer (FE-EPMA) (JEOL, 8530F). Firstly, the distribution of Nd, Pr and Co elements in the grain boundary phases of the neodymium-iron-boron magnet materials was determined by surface scanning using FE-EPMA. Then, the mole percentages of respective elements in the NdₓPr_{y}Co_{z} phase were determined by single-point quantitative analysis using FE-EPMA. The test conditions included an accelerating voltage of 15kv and a probe beam current of 50 nA. The testing results are shown in Table 2 below.

Wherein, the percentage of the area of NdₓPr_{y}Co_{z} phase refers to the ratio of the area of NdₓPr_{y}Co_{z} phase in the cross-section (that is, the vertically oriented face as mentioned above) of the neodymium-iron-boron magnet material to the total area of the grain boundary phase in the cross-section.

**Table 2**

| | **Phase** | **Percentage of phase %** | **Magnetic properties at 20°C** | | | |
|---|---|---|---|---|---|---|
| | | | **Br(kGs)** | **Hcj(kOe)** | **BHmax(MGOe)** | **Hk/Hcj** |
| Example 1 | Nd₅₅Pr₄Co₄₁ | 5.1 | 13.41 | 27.3 | 42.8 | 0.99 |
| Example 2 | Nd₅₆Pr₄Co₄₀ | 5.2 | 13.63 | 25.8 | 44.2 | 0.98 |
| Example 3 | Nd₅₅Pr₅Co₄₀ | 5 | 13.43 | 26.9 | 43.4 | 0.99 |
| Example 4 | Nd₅₃Pr₆Co₄₁ | 5.2 | 13.1 | 29.1 | 40.9 | 0.99 |
| Example 5 | Nd₅₃Pr₄Co₄₃ | 5.1 | 12.75 | 29.8 | 38.7 | 0.01 |
| Example 6 | Nd₅₆Pr₄Co₄₀ | 4.9 | 14.32 | 23.9 | 48.8 | 0.99 |
| Example 7 | Nd₅₆Pr₄Co₄₀ | 5.2 | 14.21 | 26.5 | 48.5 | 0.98 |
| Example 8 | Nd₅₄Pr₅Co₄₁ | 5.3 | 13.92 | 32 | 46.1 | 0.99 |
| Example 9 | Nd₅₅Pr₄Co₄₁ | 4.9 | 14.03 | 29.9 | 46.9 | 0.99 |
| Example 10 | Nd₅₄Pr₄Co₄₂ | 5.2 | 14.04 | 24.7 | 46.9 | 0.99 |
| Example 11 | Nd₅₅Pr₄Co₄₁ | 5.1 | 13.3 | 27.5 | 42.1 | 0.98 |
| Example 12 | Nd₅₄Pr₅Co₄₁ | 5.1 | 13.4 | 27.5 | 43.2 | 0.98 |
| Example 13 | Nd₅₁Pr₄Co₄₅ | 5.2 | 13.41 | 27.5 | 43.2 | 0.98 |
| Example 14 | Nd₅₂Pr₅Co₄₃ | 5.2 | 13.88 | 28.3 | 45.9 | 0.99 |
| Example 15 | Nd₅₂Pr₄Co₄₄ | 5.3 | 14 | 25.2 | 47.1 | 0.99 |
| Comparative Example 1 | Nd₅₃Pr₈Co₃₉ | 2.1 | 13 | 26.2 | 40.2 | 0.98 |
| Comparative Example 2 | Nd₅₂Pr₉Co₃₉ | 2 | 13.05 | 27.5 | 40.5 | 0.97 |
| Comparative Example 3 | Nd₅₁Pr₁₂Co₃₇ | 1.9 | 13.05 | 27.4 | 40.5 | 0.99 |
| Comparative Example 4 | / | / | 13.05 | 27.1 | 40.5 | 0.97 |
| Comparative Example 5 | / | / | 13.42 | 24.9 | 42.9 | 0.95 |
| Comparative Example 6 | / | / | 13.47 | 24.3 | 43.2 | 0.95 |
| Comparative Example 7 | Nd₅₁Pr₁₂Co₃₇ | 1.5 | 13.49 | 24.1 | 43.3 | 0.96 |
| Comparative Example 8 | Nd₅₂Pr₁₁Co₃₇ | 1.4 | 13.47 | 23.9 | 43.2 | 0.98 |

| | | | | | | |
|---|---|---|---|---|---|---|
| Note: The % for the value in the subscript of NdₓPr_{y}Co_{z} phase in the table is omitted. | | | | | | |

From the above experimental data, it can be seen that in the present invention, through the combination of Co, Al, Cu, Nb, rare earth elements, or the like with specific contents and in combination with the specific three-stage aging treatment in the preparation process, the coercivity of the neodymium-iron-boron magnet material prepared is improved significantly as compare to those in the prior art while maintaining higher levels of remanence and squareness. According to the further results of microscopic detection, this may be due to: in the invention, by optimizing the formula of the neodymium-iron-boron magnet material, a NdₓPr_{y}Co_{z} phase with a specific content is formed in the grain boundary phase of the neodymium-iron-boron magnet material prepared, which optimizes the grain boundary structure and improves the coercivity.

## Claims

1. A neodymium-iron-boron magnet material, **characterized by** comprising the following components of:
28-33 wt% of R, wherein R is a rare earth element, and R comprises Pr and 27-31.5 wt% of Nd;
0.30-1.3 wt% of Al;
0.35-0.6 wt% of Cu;
≥ 0.85 wt% of Co;
0.98-1.2 wt% of B;
> 0.25 wt% of Nb;
62-69 wt% of Fe, wherein
wt% is a percentage of the mass of respective component in the total mass of the neodymium-iron-boron magnet material; and
the contents of the Nb and the Pr in the neodymium-iron-boron magnet material satisfy the following formula: Nd/Pr ≥ 58.

2. The neodymium-iron-boron magnet material according to claim 1, **characterized in that**:
the content of R is 29-32.5wt%, such as 29.3wt%, 29.6wt%, 29.7wt%, 30.6wt%, 30.7wt%, 31.3wt%, 31.5wt%, 31.9wt%, 32wt%, 32.1wt% or 32.3wt%, wherein wt% is the mass percentage of R in the total mass of the neodymium-iron-boron magnet material; and/or
the content of Nd is 27-31wt%, such as 27.5wt%, 28.3wt%, 28.9wt%, 29.1wt%, 29.3wt%, 29.5wt%, 29.7wt%, 29.8wt%, 30.2wt%, 30.5wt% or 30.7wt.%, wherein wt% is the mass percentage of Nd in the total mass of the neodymium-iron-boron magnet material; and/or
the neodymium-iron-boron magnet material further comprises RH, wherein the RH is a heavy rare earth element;
wherein, the content of RH is preferably 0.5-2.5wt%, such as 0.6wt%, 0.9wt%, 1wt%, 1.2wt%, 1.4wt%, 1.5wt%, 1.7wt%, 2wt%, or 2.3wt%, wherein wt% is the mass percentage of RH in the total mass of the neodymium-iron-boron magnet material;
wherein, the RH is preferably Dy and /or Tb;
when the RH comprises Dy, the content of Dy is preferably 0.2-2.5wt%, such as 0.2wt%, 0.9wt%, 1.4wt%, 1.5wt%, 1.7wt% or 2.3wt%, wherein wt% is the mass percentage of Dy in the total mass of the neodymium-iron-boron magnet material;
when the RH comprises Tb, the content of Tb is preferably 0.5-2.5wt%, such as 0.6wt%, 0.8wt%, 1.2wt% or 2wt%, wherein wt% is the mass percentage of Tb in the total mass of the neodymium-iron-boron magnet material; and/or
the value of Nd/Pr is 60-400, such as 98, 135, 275, 283, 289, 291, 295, 297, 298, 302, 305 or 307; and/or
the content of Pr is 0.1-0.3wt%, such as 0.2wt%, wherein wt% is the mass percentage of Pr in the total mass of the neodymium-iron-boron magnet material.

3. The neodymium-iron-boron magnet material according to claim 1, **characterized in that**:
the content of Al is 0.45-1.15wt%, such as 0.46wt%, 0.61wt%, 0.65wt%, or 0.7wt%, wherein wt% is the mass percentage of Al in the total mass of the neodymium-iron-boron magnet material; and/or
the content of Cu is 0.35-0.45wt%, such as 0.36wt%, 0.37wt%, 0.38wt%, 0.39wt%, 0.4wt% or 0.42wt%, wherein wt% is the mass percentage of Cu in the total mass of the neodymium-iron-boron magnet material; and/or
the content of Co is 0.9-2.5wt%, such as 1wt%, 1.1wt%, 1.2wt%, 1.3wt%, 1.4wt%, or 1.5wt%, wherein wt% is the mass percentage of Co in the total mass of the neodymium-iron-boron magnet material; and/or
the content of Nb is 0.25-0.55wt%, such as 0.26wt%, 0.3wt% or 0.35wt%, wherein wt% is the mass percentage of Nb in the total mass of the neodymium-iron-boron magnet material; and/or
the content of B is 0.98-1.05wt%, such as 0.99wt%, 1wt%, 1.01wt%, 1.02wt% or 1.04wt%, wherein wt% is the mass percentage of B in the total mass of the neodymium-iron-boron magnet material; and/or
the content of Fe is 63-68wt%, such as 63.71wt%, 63.84wt%, 64.17wt%, 64.75wt%, 64.82wt%, 64.83wt%, 65.25wt.%, 65.61wt%, 65.78wt%, 66.23wt%, 66.84wt%, 67.04wt%, 67.24wt%, 67.34wt% or 67.35wt%, wherein wt% is the mass percentage of Fe in the total mass of the neodymium-iron-boron magnet material.

4. The neodymium-iron-boron magnet material according to any one of claims 1-3, **characterized in that**:
the neodymium-iron-boron magnet material comprises a NdₓPr_{y}Co_{z} phase, wherein based on the total moles of the Nd, the Pr and the Co in the NdₓPr_{y}Co_{z} phase being 100%, x is 50-57%, y is 3-7%, and z is 39-46%;
the x is, for example, 51%, 52%, 53%, 54%, 55% or 56%;
the y is, for example, 4%, 5%, or 6%;
the z is, for example, 40%, 41%, 42%, 43%, 44% or 45%;
the NdₓPr_{y}Co_{z} phase is located in a grain boundary phase,
wherein the ratio of the area of the NdₓPr_{y}Co_{z} phase to the total area of the grain boundary phase is preferably 3-7%, and more preferably 4.5-5.5%, such as 4.9%, 5%, 5.1%, 5.2%, or 5.3%; and the area of the NdₓPr_{y}Co_{z} phase or the total area of the grain boundary phase respectively refers to the area thereof occupied in the vertical orientation plane of the detected neodymium-iron-boron magnet material.

5. The neodymium-iron-boron magnet material according to claim 1, **characterized in that**:
the neodymium-iron-boron magnet material comprises the following components of: 29.7wt% of Nd, 0.1wt% of Pr, 1.7wt% of Dy, 0.61wt% of Al, 0.4wt% of Cu, 1wt% of Co, 0.25wt% of Nb, 0.99wt% of B and 65.25wt% of Fe, wherein wt% is a mass percentage of respective component in the total mass of the neodymium-iron-boron magnet material; the neodymium-iron-boron magnet material comprises a Nd₅₅Pr₄Co₄₁ phase in the grain boundary phase, and the ratio of the area of the Nd₅₅Pr₄Co₄₁ phase to the total area of the grain boundary phase is 5.1%; or
the neodymium-iron-boron magnet material comprises the following components of: 29.8wt% of Nd, 0.1wt% of Pr, 1.4wt% of Dy, 0.46wt% of Al, 0.38wt% of Cu, 1wt% of Co, 0.25wt% of Nb, 1wt% of B and 65.61wt% of Fe, wherein wt% is a mass percentage of respective component in the total mass of the neodymium-iron-boron magnet material; the neodymium-iron-boron magnet material comprises a Nd₅₆Pr₄Co₄₀ phase in the grain boundary phase, and the ratio of the area of the Nd₅₆Pr₄Co₄₀ phase to the total area of the grain boundary phase is 5.2%; or
the neodymium-iron-boron magnet material comprises the following components of: 30.2wt% of Nd, 0.1wt% of Pr, 1.7wt% of Dy, 0.61wt% of Al, 0.38wt% of Cu, 0.9wt% of Co, 0.3wt% of Nb, 0.99wt% of B and 64.82wt% of Fe, wherein wt% is a mass percentage of respective component in the total mass of the neodymium-iron-boron magnet material; the neodymium-iron-boron magnet material comprises a Nd₅₅Pr₅Co₄₀ phase in the grain boundary phase, and the ratio of the area of the Nd₅₅Pr₅Co₄₀ phase to the total area of the grain boundary phase is 5%; or
the neodymium-iron-boron magnet material comprises the following components of: 29.3wt% of Nd, 0.3wt% of Pr, 2.3wt% of Dy, 0.61wt% of Al, 0.39wt% of Cu, 1wt% of Co, 0.26wt% of Nb, 1.01wt% of B and 64.83wt% of Fe, wherein wt% is a mass percentage of respective component in the total mass of the neodymium-iron-boron magnet material; the neodymium-iron-boron magnet material comprises a Nd₅₃Pr₆Co₄₁ phase in the grain boundary phase, and the ratio of the area of the Nd₅₃Pr₆Co₄₁ phase to the total area of the grain boundary phase is 5.2%; or
the neodymium-iron-boron magnet material comprises the following components of: 30.7wt% of Nd, 0.1wt% of Pr, 1.5wt% of Dy, 1.15wt% of Al, 0.37wt% of Cu, 1.1wt% of Co, 0.25wt% of Nb, 0.99wt% of B and 63.84wt% of Fe, wherein wt% is a mass percentage of respective component in the total mass of the neodymium-iron-boron magnet material; the neodymium-iron-boron magnet material comprises a Nd₅₃Pr₄Co₄₃ phase in the grain boundary phase, and the ratio of the area of the Nd₅₃Pr₄Co₄₃ phase to the total area of the grain boundary phase is 5.1%; or
the neodymium-iron-boron magnet material comprises the following components of: 28.9wt% of Nd, 0.1wt% of Pr, 0.6wt% of Tb, 0.46wt% of Al, 0.36wt% of Cu, 1wt% of Co, 0.26wt% of Nb, 0.98wt% of B and 67.34wt% of Fe, wherein wt% is a mass percentage of respective component in the total mass of the neodymium-iron-boron magnet material; the neodymium-iron-boron magnet material comprises a Nd₅₆Pr₄Co₄₀ phase in the grain boundary phase, and the ratio of the area of the Nd₅₆Pr₄Co₄₀ phase to the total area of the grain boundary phase is 4.9%; or
the neodymium-iron-boron magnet material comprises the following components of: 28.3wt% of Nd, 0.1wt% of Pr, 1.2wt% of Tb, 0.45wt% of Al, 0.35wt% of Cu, 1wt% of Co, 0.26wt% of Nb, 0.99wt% of B and 67.35wt% of Fe, wherein wt% is a mass percentage of respective component in the total mass of the neodymium-iron-boron magnet material; the neodymium-iron-boron magnet material comprises a Nd₅₆Pr₄Co₄₀ phase in the grain boundary phase, and the ratio of the area of the Nd₅₆Pr₄Co₄₀ phase to the total area of the grain boundary phase is 5.2%; or
the neodymium-iron-boron magnet material comprises the following components of: 27wt% of Nd, 0.2wt% of Pr, 2.5wt% of Tb, 0.45wt% of Al, 0.36wt% of Cu, 1wt% of Co, 0.26wt% of Nb, 0.99wt% of B and 67.24wt% of Fe, wherein wt% is a mass percentage of respective component in the total mass of the neodymium-iron-boron magnet material; the neodymium-iron-boron magnet material comprises a Nd₅₄Pr₅Co₄₁ phase in the grain boundary phase, and the ratio of the area of the Nd₅₄Pr₅Co₄₁ phase to the total area of the grain boundary phase is 5.3%; or
the neodymium-iron-boron magnet material comprises the following components of: 27.5wt% of Nd, 0.1wt% of Pr, 2wt% of Tb, 0.45wt% of Al, 0.36wt% of Cu, 1.3wt% of Co, 0.26wt% of Nb, 0.99wt% of B and 67.04wt% of Fe, wherein wt% is a mass percentage of respective component in the total mass of the neodymium-iron-boron magnet material; the neodymium-iron-boron magnet material comprises a Nd₅₅Pr₄Co₄₁ phase in the grain boundary phase, and the ratio of the area of the Nd₅₅Pr₄Co₄₁ phase to the total area of the grain boundary phase is 4.9%; or
the neodymium-iron-boron magnet material comprises the following components of: 28.3wt% of Nd, 0.1wt% of Pr, 0.9wt% of Dy, 0.7wt% of Al, 0.42wt% of Cu, 1.5wt% of Co, 0.25wt% of Nb, 0.99wt% of B and 66.84wt% of Fe, wherein wt% is a mass percentage of respective component in the total mass of the neodymium-iron-boron magnet material; the neodymium-iron-boron magnet material comprises a Nd₅₄Pr₄Co₄₂ phase in the grain boundary phase, and the ratio of the area of the Nd₅₄Pr₄Co₄₂ phase to the total area of the grain boundary phase is 5.2%; or
the neodymium-iron-boron magnet material comprises the following components of: 30.5wt% of Nd, 0.1wt% of Pr, 1.5wt% of Dy, 0.65wt% of Al, 0.45wt% of Cu, 1.4wt% of Co, 0.25wt% of Nb, 0.98wt% of B and 64.17wt% of Fe, wherein wt% is a mass percentage of respective component in the total mass of the neodymium-iron-boron magnet material; the neodymium-iron-boron magnet material comprises a Nd₅₅Pr₄Co₄₁ phase in the grain boundary phase, and the ratio of the area of the Nd₅₅Pr₄Co₄₁ phase to the total area of the grain boundary phase is 5.1%; or
the neodymium-iron-boron magnet material comprises the following components of: 29.7wt% of Nd, 0.1wt% of Pr, 1.7wt% of Dy, 0.61wt% of Al, 0.4wt% of Cu, 2.5wt% of Co, 0.26wt% of Nb, 1.02wt% of B and 63.71wt% of Fe, wherein wt% is a mass percentage of respective component in the total mass of the neodymium-iron-boron magnet material; the neodymium-iron-boron magnet material comprises a Nd₅₄Pr₅Co₄₁ phase in the grain boundary phase, and the ratio of the area of the Nd₅₄Pr₅Co₄₁ phase to the total area of the grain boundary phase is 5.1%; or
the neodymium-iron-boron magnet material comprises the following components of: 29.7wt% of Nd, 0.1wt% of Pr, 1.7wt% of Dy, 0.61wt% of Al, 0.4wt% of Cu, 1.5wt% of Co, 0.25wt% of Nb, 0.99wt% of B and 64.75wt% of Fe, wherein wt% is a mass percentage of respective component in the total mass of the neodymium-iron-boron magnet material; the neodymium-iron-boron magnet material comprises a Nd₅₁Pr₄Co₄₅ phase in the grain boundary phase, and the ratio of the area of the Nd₅₁Pr₄Co₄₅ phase to the total area of the grain boundary phase is 5.2%; or
the neodymium-iron-boron magnet material comprises the following components of: 29.1wt% of Nd, 0.1wt% of Pr, 1.5wt% of Tb, 0.46wt% of Al, 0.37wt% of Cu, 0.9wt% of Co, 0.35wt% of Nb, 0.99wt% of B and 66.23wt% Fe, wherein wt% is a mass percentage of respective component in the total mass of the neodymium-iron-boron magnet material; the neodymium-iron-boron magnet material comprises a Nd₅₂Pr₅Co₄₃ phase in the grain boundary phase, and the ratio of the area of the Nd₅₂Pr₅Co₄₃ phase to the total area of the grain boundary phase is 5.2%; or
the neodymium-iron-boron magnet material comprises the following components of: 29.5wt% of Nd, 0.1wt% of Pr, 0.2wt% of Dy, 0.8wt% of Tb, 0.46wt% of Al, 0.37wt% of Cu, 1.2wt% of Co, 0.55wt% of Nb, 1.04wt% of B and 65.78wt% Fe, wherein wt% is a mass percentage of respective component in the total mass of the neodymium-iron-boron magnet material; the neodymium-iron-boron magnet material comprises a Nd₅₂Pr₄Co₄₄ phase in the grain boundary phase, and the ratio of the area of the Nd₅₂Pr₄Co₄₄ phase to the total area of the grain boundary phase is 5.3%.

6. A preparation method of a neodymium-iron-boron magnet material, **characterized by** comprising the steps of preparing a raw mixture comprising the respective components for the neodymium-iron-boron magnet material according to any one of claims 1-3 and 5, and subjecting the raw mixture to smelting, casting, pulverization, shaping, sintering and aging treatments in turn, wherein
the aging treatment includes a three-stage aging treatment, wherein, the temperature for a primary aging treatment is 850-950°C; the temperature for a secondary aging treatment is 600-650°C; and the temperature for a tertiary aging treatment is 450-550°C.

7. The preparation method of the neodymium-iron-boron magnet material according to claim 6, **characterized in that**:
the temperature for the primary aging treatment is 790-910°C, such as 900°C; and/or
the time for the primary aging treatment is 2-4 hours, such as 3 hours; and/or
the temperature for the secondary aging treatment is 610-640°C, such as 620°C or 630°C; and/or
the time for the secondary aging treatment is 1-4 hours, such as 2 hours; and/or
the temperature for the tertiary aging treatment is 470-490°C, such as 480°C; and/or
the time for the tertiary stage aging treatment is 1-4 hours, such as 3 hours; and/or
the preparation method further comprises a grain boundary diffusion treatment after the tertiary aging treatment;
wherein, the temperature for the grain boundary diffusion treatment is preferably 850-1000°C, such as 900°C, 910°C or 920°C;
wherein, the time for the grain boundary diffusion treatment is preferably 10-30 hours, such as 20 hours;
wherein, the diffusion source for the grain boundary diffusion treatment is preferably a Dy metal powder and/or an alloy comprising Dy; and a mass percentage of the diffusion source in the total mass of the neodymium-iron-boron magnet material is preferably 0.3-0.5wt%, such as 0.4wt%.

8. The preparation method of the neodymium-iron-boron magnet material according to claim 6 or 7, **characterized in that**:
the vacuum degree for the smelting is 5×10⁻²Pa; and/or
the temperature for the smelting is 1550°C or less, such as 1530°C; and/or
the casting process is a strip casting process; and/or
the temperature for the casting is 1390-1460°C, such as 1400°C; and/or
the alloy sheet obtained after the casting has a thickness of 0.25-0.40 mm, such as 0.29mm; and/or
the pulverization comprises hydrogen decrepitation and jet mill pulverization in turn;
wherein, the process of the hydrogen decrepitation preferably comprises hydrogen absorption, dehydrogenation, and a cooling treatment in turn;
the hydrogen absorption is carried out under a condition of a hydrogen pressure of such as 0.085 MPa;
the temperature for the dehydrogenation is for example 480-520°C, such as 500°C;
wherein, the jet mill pulverization is carried out in a gas atmosphere preferably with an oxidizing gas content of 100 ppm or less, and the oxidizing gas content refers to the content of oxygen and/or moisture content;
wherein, after the jet mill pulverization, a lubricant such as zinc stearate is preferably added, wherein the added amount of the lubricant is preferably 0.05-0.15%, such as 0.12% of the mass of the powder obtained after the jet mill pulverization; and/or
the shaping is a magnetic field shaping; wherein, the magnetic field shaping is carried out at magnetic field strength of such as 1.8-2.5T; and/or
the temperature for the sintering is 1000-1100°C, such as 1080°C; and/or
the time for the sintering is 4-8 hours, such as 6 hours.

9. A neodymium-iron-boron magnet material prepared by the preparation method of the neodymium-iron-boron magnet material according to any one of claims 6-8.

10. Use of the neodymium-iron-boron magnet material according to any one of claims 1-5 and 9 as an electronic component.
